# EUROPEAN PATENT SPECIFICATION

(11) **EP 0 858 622 B1**
(45) Date of publication and mention of the grant of the patent: **28.08.2002**
(21) Application number: 96935619.5
(22) Date of filing: 29.10.1996
(51) Int. Cl.: G03H 1/26, G02B 5/18, G02B 27/44

(54) **OPTICALLY VARIABLE DEVICE (OVD), METHOD OF RECORDING OVD AND AN OVD RECORDER**
OPTISCH VARIABLES ELEMENT, METHODE ZU SEINER AUFNAHME UND AUFNAHMEVORRICHTUNG DAZU
ELEMENT OPTIQUE VARIABLE, PROCEDE ET APPAREIL D'ENREGISTREMENT

(30) Priority: 31.10.1995 PL 31119295
(43) Date of publication of application: 19.08.1998
(73) Proprietor: Gajda, Remigiusz, 00-233 Warszawa (PL); Stepien, Pawel, 02-760 Warszawa (PL)
(72) Inventor: Gajda, Remigiusz, 00-233 Warszawa (PL); Stepien, Pawel, 02-760 Warszawa (PL)
(74) Representative: Zinnecker, Armin, Dipl.-Ing.
(86) International application number: PL9600018
(87) International publication number: WO97016772

(56) References cited:
- EP-A- 0 375 833
- WO-A-91/03747
- US-A- 4 778 262
- US-A- 5 262 879

## Description

The subject of the present invention is an OVD and a method of recording said OVD and a recorder realising this method.

OVDs in the form of diffractive structures and holograms with resolution of some 1000 line pairs per mm typical for such elements are frequently used for many purposes, e.g. as authenticating elements. Mosaics of diffraction gratings are good examples of such elements. One of the best known types of OVDs is a "Kinegram" disclosed in Swiss patent 04576. Images visible on the kinegram smoothly change depending on the viewing angle. This effect is achieved by dividing the element plane into pixels which are further divided into a number of fragments, imperceptible to the naked eye, the fragments being assigned to particular images. Fragments of different pixels corresponding to a given image are provided with straight diffraction gratings in such a manner that all there pixels diffract light into one direction, so this image is visible at a proper viewing angle. Where the viewing angle is changed, pixel fragments corresponding to another image become visible. The main disadvantage of such OVDs is a limitation of the number of images which may be recorded on one OVD to a certain predefined number and a limitation of resolution used in OVD recording. In particular it is impossible to produce this way an OVD containing smoothly changing high resolution images.

In Japanese patents JP 26684/91 and JP 79080 are described methods of recording OVDs in which curvilinear diffraction gratings with precisely defined grooves shapes are used. This enables to obtain desired effects of optical variability. It is also possible to record OVD using lithographic techniques. Its main disadvantage is a high cost of the process and relevant equipment to carry it out.

Another method of recording OVD is disclosed in US Patent 5262879. In this method, a flat image scanned into the computer memory is converted into diffraction grating pixels forming an OVD. This grating is recorded pixel by pixel on a photosensitive surface using an optical laser recorder. The disadvantage of this method is its small flexibility, i.e. a limited range of potential OVDs possible to make.

The method described in the present invention eliminates the disadvantages mentioned above.

OVDs may be recorded with the use of devices, consisting of a laser, a shutter, an optical beam expander, a rotationally mounted diffraction grating, a convergent lens in whose focal point a diaphragm in the form of a dark point shading undiffracted light is provided. The other lens produces a properly reduced image of the grating with doubled line pairs on the photosensitive material located on a computer-driven XY moving stage. A disadvantage of such a recorder is a limited range-of potential OVDs, which may only contain fixed spatial frequency diffraction gratings with variable angular orientations.

The recorder described in the present invention eliminates the disadvantages mentioned above.

WO-A-91/03747 and EP-A- 375 833 disclose optically variable devices with a plurality of pixels. From US-A-4778262, a method of recording an optically variable element comprising a laser, lenses and XY moving state and an image of the pixel in front of a lens is known.

It is the object of the invention to provide an improved optically variable device and an improved method of recording an optically variable device. This object is achieved with an optically variable device having the features of claim 1 and a method of recording an optically variable device having the features of claim 4. The respective subclaims are directed to preferable embodiments.

An embodiment of the invention is presented schematically in the drawings.
Figure 1 shows an OVD and a map of viewing angles for one pixel,
Figure 2 shows the method of an OVD recording, and
Figure 3 shows an OVD recorder realizing the method.

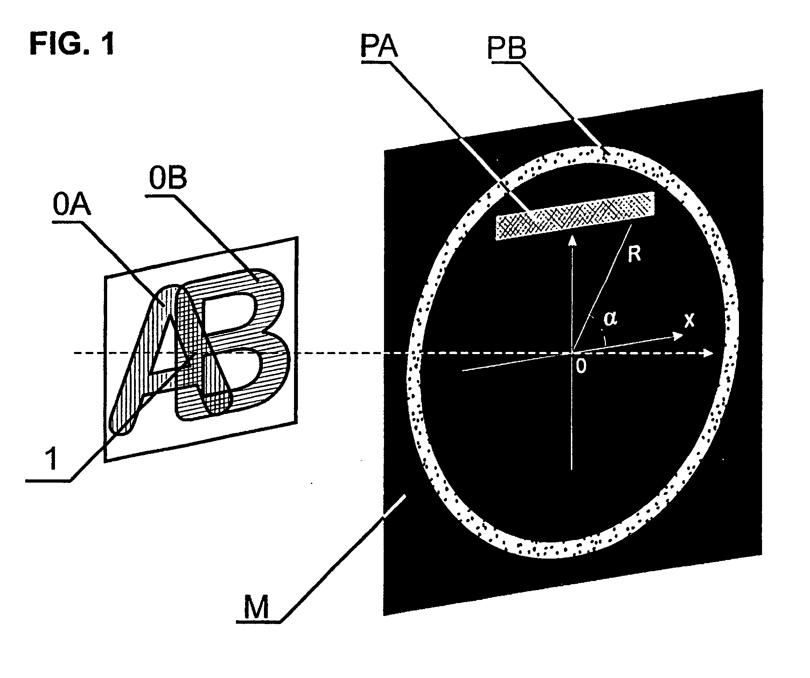

An optically variable device (OVD), (Fig.1) contains a diffractive structure consisting off small pixels 1 which are pure phase Fourier holograms of maps M of viewing angles of these pixels. Every such map M contains an image composed of light points against a black background. An angle α between a segment of a line from the middle O of the map of angles to any of the light points and an OX axis represents one direction of the element's viewing, the length R of this segment represents spatial frequency for this pixel and the angle of the element's inclination needed to view this pixel, and the value of the point's brightness represents a relative intensity of light diffracted in this direction and spatial frequency. A complete image composed of such points forms a map of viewing directions, in which the pixels diffract light when illumined with monochromatic light. For example, an OVD containing two, partially overlapping images OA and OB, which should be visible within different ranges of viewing angles PA and PB contains at least 3 types of pixels 1:
1. the pixels contained only in the OA image area, whose map of viewing angles contains only the light area PA,
2. the pixels contained only in the OB image area, whose map of viewing angles contains only the light area PB,
3. the pixels contained in the common part of the OA and the OB image areas, whose map of viewing angles contains the light area being the sum of areas PA and PB.

The map of viewing angles for each pixel is represented in the computer by a matrix of complex numbers whose amplitudes are equal to brightnesses of corresponding points of the map of viewing angles, and phases are assigned in the form of a so called diffuser, being a matrix of complex numbers with amplitudes equal to 1, composed in a way securing maximum uniformity of the distribution of values of amplitude in the Fourier transform of this matrix. The simplest diffuser is the random diffuser, being a matrix of complex numbers with randomly assigned arguments. The matrix composed in this way is then Fourier transformed, and from the resulting complex matrix only its phase (argument) values are stored in memory. The phase values matrix is then graphically represented as an image of the pixel, where the subsequent grey scale levels represent subsequent phase values. Typically, this pixel image is composed of irregular lines. Distances between these lines are more or less constant, especially in the case of a map containing only the PA area. The image of the pixel is recorded, in a proper scale (giving the lines resolution of some 600-1500 lines/mm), on a relief photosensitive material (photoresist), where the gray levels of the pixel map are reflected in the relief depth.

A coloured, flat, optically invariable image (e.g. graphics) or a set of such images is converted to an OVD consisting of pixels described above in a way ensuring the best readability after illumination with white light from proper directions. In this example, an image OA is visible at a constant vertical inclination of the OVD within a wide range of horizontal inclination angles, and an OB image is visible when the OVD is properly inclined in relation to the light source and rotated in its plane at any value.

Besides the pixels being Fourier holograms of maps of viewing angles, the OVD may contain a rainbow hologram, commonly used as an authenticating element. The rainbow hologram may be recorded as an analogue hologram in a traditional optical arrangement or as a computer generated rainbow hologram using a computer controlled recorder described later. Inclusion of a rainbow hologram in the OVD described above enhances its esthetical value.

The method of recording of an OVD resides in the following:
1. A Fourier transform of the map of viewing angles is calculated and a gray scale map of its phase (argument) being a pixel image 6 is printed on a transparence or displayed on a spatial light modulator,
2. the pixel image 6 is then illuminated with an expanded, convergent beam L of laser light,
3. using the lens 4, the pixel map is reduced to proper lines density on a photosensitive material,
4. laser light beam L is shut off using a shutter 2, and the photosensitive material is moved to the position of the next pixel using an XY moving stage 5,
5. the shutter then opens and the procedure is repeated until all the pixels of OVD are exposed.

It is advantageous that the laser beam L after passing through the pixel map image 6 is modified by a filter 7. The filter located in the laser beam focal plane, where the map of the pixel viewing angles is optically reproduced, stops the light corresponding to angles in which OVD should not be visible.

It is also advantageous, when the Fourier transform (FT) of the map of viewing angles (MVA) is calculated using an iterative Fourier transform algorithm (IFTA), to obtain a uniform value of the transform amplitude, which is impossible with the use of a direct way of the Fourier transform calculation. In the IFTA the complex matrix of the same size as MVA is filled with complex numbers whose amplitudes correspond to MVA values and random number are assigned to arguments (a random diffuser is applied). Then the direct FT is applied and the amplitudes of resulting complex matrix elements are uniformised (i.e. they all receive the same value, usually 1) without changing their arguments. Subsequently, the reverse FT is calculated (thus returning to the MVA domain) and the amplitudes of matrix elements are filled with MVA values with no change to elements phases. This loop is repeated several times (usually 5-20) and completed after the direct FT calculation producing a complex matrix with highly uniformised amplitudes of elements and very good quality of MVA restoration.

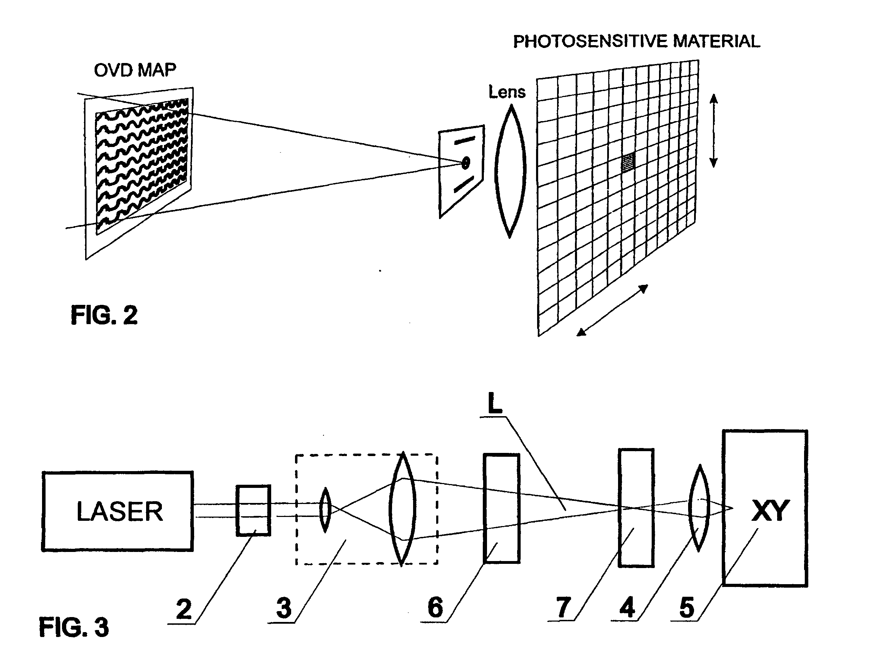

The OVD recorder, Fig.3, consists of a laser which is the source for the beam L of monochromatic light. Behind (or within) the laser there is a shutter 2 and a beam expander 3, which forms an expanded, convergent beam of laser light with its focal point located in front of the lens 4 photoreducing the image 6 of the pixel map, which is located between the expander 3 and the lens 4, on the photosensitive material located on the XY moving stage. The recorder is controlled by an external computer opening the shutter 2 and controlling the movement of the XY stage.

The recorder may also contain the filter 7 located in front of the lens 4 in the focal plane of the expander 3. This filter modifies Fourier spectrum of the image of the pixel thus modifying MVA restoration.

## Claims

1. An optically variable device comprising a plurality of diffractive pixels, each pixel being a pure phase Fourier transform hologram of a map of viewing angles associated with each of said pixels; wherein
said plurality of pixels comprising at least two subsets of pixels;
each of the pixels of a first subset of said plurality of pixels contained in a first area (OA) is a Fourier hologram of a first map of viewing angles (PA); and
each of the pixels of a second subset of said plurality of pixels contained in a second area (OA) is a Fourier hologram of a second map of viewing angles (PB).

2. An optically variable device according to claim 1 wherein said plurality of pixels comprise a third subset of pixels comprised in an area being an intersection of the first area (OA) and the second area (OB); each of the pixels of the third subset being a Fourier hologram of the sum of said first map and second map of viewing angles (PA, PB).

3. An optically variable device according to claim 1, **characterised in that** at least one such pixel lies near a rainbow hologram.

4. A method of recording an optically variable device in accordance with any of claims 1 to 3, wherein, after the opening of a shutter (2) an expanded and convergent beam (L) of laser light illuminates an image (6) of the pixel map obtained as a graphical reproduction of a phase of a Fourier transform of the map of viewing angles associated with this subset of pixels; and, using a lens (4), this map is photoreduced to a desired size and projected onto a photosensitive material; after closing the shutter to shut off the laser light beam (L), the photosensitive material where the device is to be recorded is moved to the position of the next pixel using an XY moving stage (5); and wherein the procedure is repeated until the pixels of all subsets are exposed.

5. A method according to claim 4 wherein the convergent beam (L) of laser light, after passing through the image (6) of the map of the pixels, is modified by a filter (7), lying in a plane where the image (6) Fourier transform is formed by the lens.

6. A method according to claim 4 wherein the Fourier transforms of the maps of viewing angles are calculated using an iterative Fourier transform algorithm.

## Patentansprüche

1. Optisch variables Element (OVD), welches eine Mehrzahl von beugenden Pixeln aufweist, wobei jedes Pixel ein Reinphasen-Fourier-Transformationshologramm einer Karte von mit jedem der genannten Pixel verbundenen Bildwinkeln ist,
wobei die genannte Mehrzahl von Pixeln mindestens zwei Untergruppen von Pixeln aufweist,
wobei jedes der Pixel einer ersten Untergruppe der genannten, in einer ersten Fläche (OA) enthaltenen Mehrzahl von Pixeln ein Fourier-Hologramm einer ersten Karte von Bildwinkeln (PA) ist, und
jedes der Pixel einer zweiten Untergruppe der genannten, in einer zweiten Fläche (OB) enthaltenen Mehrzahl von Pixeln ein Fourier-Hologramm einer zweiten Karte von Bildwinkeln (PB) ist.

2. Optisch variables Element nach Anspruch 1, bei dem die genannte Mehrzahl von Pixeln eine dritte Untergruppe von Pixeln umfaßt, welche in einer Fläche eingeschlossen sind, die durch eine Überlappung der ersten Fläche (OA) und der zweiten Fläche (OB) gebildet wird, wobei jedes der Pixel der dritten Untergruppe ein Fourier-Hologramm der Summe der genannten ersten Karte und der genannten zweiten Karte von Bildwinkeln (PA, PB) ist.

3. Optisch variables Element nach Anspruch 1, **dadurch gekennzeichnet, daß** mindestens ein solches Pixel in der Nähe eines Regenbogenhologramms liegt.

4. Verfahren zur Aufnahme eines optisch variablen Elements nach einem der Ansprüche 1 bis 3, bei dem nach Öffnung eines Verschlusses (2) ein expandierter und konvergierender Strahl (L) aus Laserlicht ein Bild (6) der Pixelkarte beleuchtet, das als eine graphische Reproduktion einer Phase einer Fourier-Transformation der Karte von mit dieser Untergruppe von Pixeln verbundenen Bildwinkeln erhalten wurde, und bei dem die genannte Karte unter Verwendung einer Linse (4) auf eine gewünschte Größe photoreduziert und auf ein lichtempfindliches Material projiziert wird, nachdem der Verschluß geschlossen wurde, um den Laserlichtstrahl (L) abzuschalten, wobei das lichtempfindliche Material, auf dem das Element jeweils aufzunehmen ist, unter Verwendung eines beweglichen XY-Objekttisches (5) zur Position des nächsten Pixels bewegt wird, und das Verfahren solange wiederholt wird, bis die Pixel sämtlicher Untergruppen belichtet wurden.

5. Verfahren nach Anspruch 4, bei dem der konvergierende Laserlichtstrahl (L) nach Passieren des Bildes (6) der Karte von Pixeln durch ein Filter (7) modifiziert wird, welches in einer Ebene liegt, in der die Bild(6)-Fourier-Transformation durch die Linse gebildet wird.

6. Verfahren nach Anspruch 4, bei dem die Fourier-Transformation der Karten von Bildwinkeln unter Verwendung eines iterativen Fourier-Transformations-Algorithmus berechnet werden.

## Revendications

1. Elément optique variable comportant une pluralité de pixels diffractifs, chaque pixel étant un hologramme de transformation de Fourier de phase pure d'une carte d'angles de vue associés à chacun desdits pixels, dans lequel ladite pluralité de pixels comporte au moins deux sous-ensembles de pixels, chacun des pixels d'un premier sous-ensemble de ladite pluralité de pixels contenu dans une première zone (OA) étant un hologramme de Fourier d'une première carte d'angles de vue (PA), et chacun des pixels d'un second sous-ensemble de ladite pluralité de pixels contenu dans une seconde zone (OB) étant un hologramme Fourier d'une seconde carte d'angles de vue (PB).

2. Elément optique variable selon la revendication 1, dans lequel ladite pluralité de pixels comporte un troisième sous-ensemble de pixels compris dans une zone qui est constituée par un recoupement de la première zone (OA) et de la seconde zone (OB), chacun des pixels du troisième sous-ensemble étant un hologramme de Fourier de la somme de ladite première carte et de ladite seconde carte d'angles de vue (PA, PB).

3. Elément optique variable selon la revendication 1, **caractérisé en ce qu'**au moins un de ces pixels se trouve à proximité d'un hologramme arc-en-ciel.

4. Procédé d'enregistrement d'un élément optique variable selon l'une quelconque des revendications 1 à 3, dans lequel après l'ouverture d'un obturateur (2), un rayon élargi et convergent (L) d'une lumière laser éclaire une image (6) de la carte de pixels obtenue en tant que reproduction graphique d'une phase d'une transformation de Fourier de la carte d'angles de vue associés à ce sous-ensemble de pixels ; et par l'usage d'une lentille (4), cette carte est photo-réduite à une taille désirée et projetée sur un matériau photo-sensible ; après la fermeture de l'obturateur pour couper le rayon de lumière laser (L), le matériau photo-sensible sur lequel l'élément est à enregistrer est déplacé à la position du pixel voisin en utilisant un plateau mobile XY (5); et dans lequel le procédé est répété jusqu'à ce que les pixels de tous les sous-ensembles sont exposés.

5. Procédé selon la revendication 4, dans lequel le rayon convergent de lumière laser (L), après avoir traversé l'image (6) de la carte de pixels, est modifié par un filtre (7) se trouvant dans un plan où la transformation de Fourier de l'image (6) est formée par la lentille.

6. Procédé selon la revendication 4, dans lequel les transformations de Fourier de la carte d'angles de vue sont calculées en utilisant un algorithme de transformation de Fourier itératif.
